# EUROPEAN PATENT APPLICATION

(11) **EP 4 715 767 A1**
(43) Date of publication of application: **25.03.2026**
(21) Application number: 24201318.3
(22) Date of filing: 19.09.2024
(51) Int. Cl.: G07C 5/00, B60K 35/21, B60Q 1/26, B60R 1/06, B60R 21/015

(54) **REAR-VIEW DEVICE FOR A VEHICLE**

(71) Applicant: Volvo Car Corporation, 405 31 Göteborg (SE)
(72) Inventor: HERMANSSON, Joakim, 40531 Göteborg (SE)
(74) Representative: Maiwald GmbH

(57) **Abstract**

The disclosure relates to a rear-view device (10) for a vehicle (100), the rear-view device (10) comprising at least one indication unit (20) configured to provide an indication of a state of one or more systems (50, 60, 70, 80, 90) of the vehicle (100) depending on a standstill state of the vehicle (100).

## Description

### TECHNICAL FIELD

The present disclosure relates to a rear-view device and a vehicle.

### BACKGROUND ART

Modern vehicles may be equipped with different systems such as, for example, a blind spot information system, an anti-theft system, and so on. Typically, all systems provide the indication of their function independent from one another. For example, an activated alarm indication of an anti-theft system is provided independent from a blind spot indication of a blind spot information system. Also, the indications are typically given by different indication units at specific locations of the vehicle which are reserved for that function or indication, and hence are not available for other functions or indications.

### SUMMARY

The problem is at least partially solved or alleviated by the subject matter of the independent claims of the present disclosure, wherein further examples are incorporated in the dependent claims.

According to a first aspect, there is provided a rear-view device for a vehicle, the rear-view device comprising at least one indication unit configured to provide an indication of a state of a system of the vehicle depending on and/or during a standstill state of the vehicle.

Advantageously, the invention proposes the use of the rear-view device as location for an indication unit to provide an indication of a state of one or more systems of the vehicle depending on a standstill state of the vehicle. Typically, this location may be reserved for indicating a blind spot situation as may be determined by a blind spot information system. However, it has been found by the inventor that this indication is limited to driving states of the vehicle and hence, such indication will typically not be given and is not in conflict with indications during a standstill state of the vehicle. Hence, by providing at least one indication unit on the rear-view device to indicate a state of one or more systems in dependence on a standstill state of the vehicle, the indications on the rear-view device are not in conflict with one another and the user or driver of the vehicle may distinguish the different indications based on the given context, i.e., driving or stillstand of the vehicle. Moreover, the indication units being used for the indications during standstill and for any indication during driving, e.g., for indicating a blind spot situation, may even be the same such that no further indication units may need to be provided on a rear-view device to provide the advantages described herein.

Moreover, having the indication unit on the rear-view device enables the user, in particular driver, of the vehicle to notice the indication quickly because of the rear-view device's safety relevance and its typically prominent position at the vehicle, which allows any user inside the cabin of the vehicle or person outside of the vehicle to quickly notice the provided indication.

A rear-view device as described herein is to be understood as any device of the vehicle providing a rear-view, in particular for a user or driver of the vehicle from inside a cabin of the vehicle. The rear-view device may generally be positioned inside the cabin of the vehicle, i.e., be an interior device, or the rear-view device may be positioned outside of the cabin of the vehicle, i.e., be an exterior device. The rear-view device may in particular comprise a mirror and hence be, for example, an interior mirror or exterior mirror. Alternatively, or additionally, the rear-view device may comprise a display for displaying a picture or video of a rear-view captured by one or more cameras of the vehicle.

The indication unit as described herein is to be understood as any unit capable of providing an indication. For example, but not limited hereto, the indication unit may be any of a light unit, a display unit, and similar.

The provided indication may be associated with a vehicle function, which may be a function executed or useful during standstill of the vehicle unless the vehicle function is associated with a driving state of the vehicle, e.g., in the case of a blind spot situation indication. Specifically, the indication may be depending on the standstill state of the vehicle, in particular be active during standstill of the vehicle only. Accordingly, the indication would not be provided during a driving state of the vehicle. Standstill state may include the situations of a parked vehicle, an idling vehicle, and/or similar. When providing the indication of the state of the system during standstill state of the vehicle, the indication may indicate states or conditions of the vehicle without conflicting with safety relevant indications during driving of the vehicle. Specifically, it may be avoided that too many indications are given to the user or driver of the vehicle, specifically at the same location of the vehicle, in this case the rear-view device, and which may not be necessary during driving of the vehicle or not be relevant for the driving of the vehicle, e.g., an indication of an activated state of an anti-theft system of the vehicle. Hence, indications on the rear-view device may be given at different times depending on the state of the vehicle, namely driving state or standstill state, without conflicting each other.

According to an example, the state of the one or more systems may be from one or more of: an activated state of an anti-theft system of the vehicle; a passenger occupancy state from a passenger detection system of the vehicle; a state of charge of a battery system of the vehicle; a driving range state of a range determination system of the vehicle; or a proximity state between an object and a vehicle door of a proximity system of the vehicle. In particular, the state of the one or more of the aforementioned list of states may be two or three or more. Also, the list may be comprising any two, three or four of the states. Accordingly, the activated or, in other words, armed state of an anti-theft system may be indicated on the rear-view device instead or in addition to other locations such as near the windshield or on a door. The advantage of the location on the rear-view device is that it may be well seen even at great distances from the vehicle, especially when provided on an exterior rear-view device compared to, e.g., indication units at the door or near the windshield. Also, or alternatively, a passenger detection system may be detecting whether a passenger is located inside the cabin of the vehicle or is located outside of the cabin or vehicle and based thereon determine a passenger occupancy state, in particular how many passengers or whether a passenger is located inside the cabin of the vehicle or not. For example, the vehicle or a main user or driver of the vehicle may want to make sure that all passengers have left the cabin of the vehicle before locking the vehicle. Hence, providing an indication of the passenger occupancy state, e.g., that the cabin is not occupied or that the cabin is occupied, may be advantageous. When providing this indication on the rear-view device, e.g., an exterior rear-view device, the main user or driver of the vehicle may take notice of whether the cabin is still occupied or not very well even if they are outside the cabin by simply looking at the exterior rear-view device and the thereon provided indication. For example, one or more interior and/or exterior cameras of the passenger detection system of the vehicle may be used to detect passengers inside and/or outside the cabin and determine the passenger occupancy state. Additionally, or alternatively, a state of charge of a battery system of, for example, an electric vehicle, may be indicated by the at least one indication unit. The state of charge may be determined or provided by a battery (management) system of the vehicle. Thereby, a user or driver of the vehicle may easily take notice of the state of charge. For example, if the user or driver of the vehicle is located outside of the vehicle and the indication is provided on an exterior rear-view device, the user or driver does not need to access the vehicle or look up the state of charge on a charging station. Instead, they may see the state of charge even at great distance when looking at the indication by the indication unit of the exterior rear-view device. Similarly, an indication of the driving range of the vehicle may be given. E.g., when the vehicle is equipped with an internal combustion engine or a fuel cell, the indication of the driving range may be given in terms of the fuel or hydrogen in a tank of the vehicle. The driving range may be determined or provided by a range determination system of the vehicle. Advantageously, both, the indication of the state of charge and driving range is given during standstill of the vehicle, in particular during a charging or fueling operation. Additionally, or alternatively, a proximity between an object and a vehicle door of the vehicle may be indicated on the indication unit. The object may in particular be a static object during standstill of the vehicle. Such static object may for example be another vehicle, a wall, or similar. Thereby, when the vehicle is parked and a user wants to exit the vehicle, they may know about how close they are pushing the door towards the object when opening the door and without seeing the object. For this purpose, one or more exterior cameras or proximity sensors of a proximity system of the vehicle may be used to determine the proximity between the object and the vehicle door.

According to an example, the at least one indication unit may be a single indication unit configured to provide an indication for two or more of: an activated state of an anti-theft system of the vehicle; a passenger occupancy state from a passenger detection system of the vehicle; a state of charge of a battery system of the vehicle; a driving range of a range determination system of the vehicle; or a proximity state between an object and a vehicle door of a proximity system of the vehicle. Especially, the aforementioned list may comprise any two or three states. Thereby, the same single indication unit may be advantageously used to indicate two or more states.

According to an example, the at least one indication unit may be further configured to provide a further indication of a further state of a further system of the vehicle depending on a driving state of the vehicle. That further state may in particular be a state of driver information system of the vehicle based on a situation in an environment of the vehicle. For example, the driver information system may be a blind spot information system. The situation may be that another road participant is in a blind spot in the rear-view device. The accordingly indicated blind spot state may be that another road participant is in a blind spot of the rear-view device. Thereby, the safety during driving of the vehicle may be increased. For example, there may be two indication units on the rear-view device, one for the blind spot state indication and one for the indication of the state depending on the standstill state of the vehicle. Alternatively, there may be a single indication unit for both, for the indication of the state depending on the stillstand state and for the indication depending on the driving state of the vehicle.

According to an example, the state may be an activated state of an anti-theft system of the vehicle and the at least one indication unit may be configured to provide the indication of the activated state of the anti-theft system when one or more doors of the vehicle are locked. The activated state of the anti-theft system may include an activated alarm of the anti-theft system. The one or more doors of the vehicle being locked may be a condition to arm or, in other words, activate the alarm of the anti-theft system. Additionally, or alternatively, a further condition may be that the cabin of the vehicle is not being occupied by a person. For example, the indication unit may comprise a first mode, in which it may be configured to indicate, e.g., by emitting a light, the state of the system depending on the standstill state of the vehicle. Further, the indication unit may comprise a second mode, in which it may be configured to indicate, e.g., by emitting the same or different light, the further state depending on the driving state of the vehicle. The indication unit may be configured switchable between the first mode and the second mode. Accordingly, the different indications of states depending on either the standstill state or driving state of the vehicle are not in conflict with one another but selected based on the mode of the at least one indication unit. For example, the indication unit may be configured to switch to the first mode based on a first signal indicative of a stillstand state of the vehicle, wherein the indication unit may be configured to switch to the second mode based on a second signal indicative of a driving state of the vehicle. The signals may be generated by, for example, an ignition or drive system of the vehicle, indicating whether the vehicle is in stillstand or being driven, for example.

According to an example, the state may be a state of charge of a battery system of the vehicle and/or a driving range state of a range determination system of the vehicle during a charging and/or re-fueling process of the vehicle. The charging and/or re-fueling process of the vehicle may be a condition for the at least one indication unit to provide the indication of the charging state and/or driving range state

According to an example, the state may be a proximity state between an object and a vehicle door of a proximity system of the vehicle during a parked state of the vehicle. The object may in particular be a static object such as a wall or parked car. The parked state as particular state of a stillstand state may be a condition for the at least one indication unit to provide the indication of the proximity state. The parked state may for example include that a parking brake of the vehicle is activated or that a gear selector of the vehicle is selected for parking. Alternatively, the object may be a moving object such as a pedestrian or cyclist.

According to an example, the indication unit may be a light unit configured to emit a light associated with the first vehicle function (e.g., to indicate the situation in the environment of the vehicle) and/or to emit a light associated with the second vehicle function (e.g., to indicate the activated state of the anti-theft system and/or any one of the aforementioned examples as second vehicle function or additional third vehicle function, fourth vehicle function and so on depending on the number of implemented vehicle functions).

According to an example, the at least one indication unit may be at least one light unit configured to emit a light to provide the indication. For example, the light unit may comprise one or more light-emitting diodes for emitting the light. In particular, the same light-emitting diodes or, alternatively, different light-emitting diodes may be used for emitting the light for indicating different states.

According to an example, the at least one light unit may comprise one or more light-emitting means, the one or more light-emitting units being arranged in a mirror area of a mirror unit or in a display area of a display unit of the rear-view device such that the light is emitted at the mirror area or the display area. For example, the one or more light-emitting means may be one or more light-emitting diodes arranged at or behind the mirror area of the mirror unit or display area of the display unit. Also, in case of a display unit, the one or more light-emitting means may be configured as one or more light-emitting display areas.

According to an example, the at least one light unit may be configured to provide the indication of an activated state of an anti-theft system of the vehicle by emitting a red light and/or a flashing light. Hence, the at least one light unit may be configured to emit a red light and/or a flashing light. Specifically, the red light and/or the flashing light may be intuitively associated with the anti-theft system, in particular its activated state. Having a red flashing light in particular may be intuitively associated by a user and everyone else with an activated anti-theft system.

According to an example, the at least one light unit may be configured to provide the indication of a state of charge of the battery system of the vehicle and/or the driving range state of a range determination system of the vehicle by emitting a light with an intensity, flashing frequency, illumination area and/or color correlating with the state of charge and/or the driving range state of the vehicle. Accordingly, a user may at least approximately become aware of the charging level and/or driving range by judging the intensity, flashing frequency, illumination area and/or color of the emitted light. For example, the intensity of the light may be low to high, with a low intensity light indicating a low state of charge and/or driving range, whereas a high intensity light may be indicating a high or full state of charge and/or driving range. Similarly, a low or high flashing frequency may be used to indicate either a low or a high state of charge and/or driving range. Also, the at least one light unit may comprise an area that it may illuminate, e.g., by using several light-emitting means. Only emitting light from, for example, half of the light-emitting means, may only illuminate half of the illuminable area. The corresponding illumination area may thus for example indicate the state of charge and/or driving range is at half of its maximum capacity. Also, the concept of different colors to indicate low state of charge and/or driving range may be used. For example, a red color may indicate low state of charge and/or driving range, a yellow or orange color may indicate medium state of charge and/or driving range, and a green color may indicate a high state of charge and/or driving range.

According to an example, the at least one light unit may be configured to provide the indication of a proximity state between an object and a vehicle door of a proximity system of the vehicle by emitting a light with an intensity, flashing frequency, illumination area and/or color correlating to the proximity state. Accordingly, a user may at least approximately become aware of the proximity of the vehicle door to the object by judging the intensity, flashing frequency, illumination area and/or color of the emitted light. For example, the intensity of the light may be low to high, with a low intensity light indicating a large distance or clearance between the vehicle door and object, whereas a high intensity light may be indicating a small distance between the vehicle door and object. Similarly, a low or high flashing frequency may be used to indicate either a small or large clearance between the vehicle door and the object. Also, the at least one light unit may comprise an area that it may illuminate, e.g., by using several light-emitting means. Only emitting light from, for example, half of the light-emitting means, may only illuminate half of the illuminable area. The corresponding illumination area may thus for example indicate that the vehicle door has been opened by half the distance it can be opened until it contacts the object. Also, the concept of different colors to indicate large or small clearance may be used. For example, a red color may indicate that the vehicle door is about to contact the object if opened much further, a yellow or orange color may indicate that the vehicle door is coming relatively close to the object, and a green color may indicate that there is much clearance and the vehicle door can be opened further without risk of contacting the object.

According to an example, the indication unit may be a display unit configured to display the. Hence, instead or in addition to a mirror unit of the rear-view device, the rear-view device may use a display unit for the indication of the state or states.

According to an example, the rear-view device may be an exterior rear-view device. The exterior rear-view device is particularly often observed the driver of the vehicle and also allows to view the indication of the state from outside of the vehicle since it is on the exterior side of the vehicle. Thereby, it facilitates to conveniently provide indication of all states as exemplary described herein.

According to a second aspect, there is provided a vehicle comprising the rear-view device of the first aspect of this disclosure.

The vehicle may for example be a car or truck. The vehicle may be equipped with any propulsion system, i.e., the vehicle may be an electric vehicle, internal combustion engine vehicle, fuel cell vehicle, and/or similar. Also, the vehicle may comprise two rear-view devices in the form of exterior rear-view devices, where at least one or both may be configured according to the first aspect of this disclosure, i.e., comprising the at least one indication unit with its configuration.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a view from inside of a cabin of a vehicle on an exterior rear-view device of the vehicle;
- Figure 2: shows a view from inside of a cabin of a vehicle on an alternative exterior rear-view device of the vehicle;
- Figures 3a-3d: show schematic illustrations of different operating conditions of an indication unit of the exterior rear-view device of Fig. 1; and
- Figure 4: shows a schematic illustration of the vehicle of Fig. 1 with its components and systems.

### DETAILED DESCRIPTION

The Figures are merely schematic representations and serve only to illustrate examples of the disclosure. Identical or equivalent elements are in principle provided with the same reference signs.

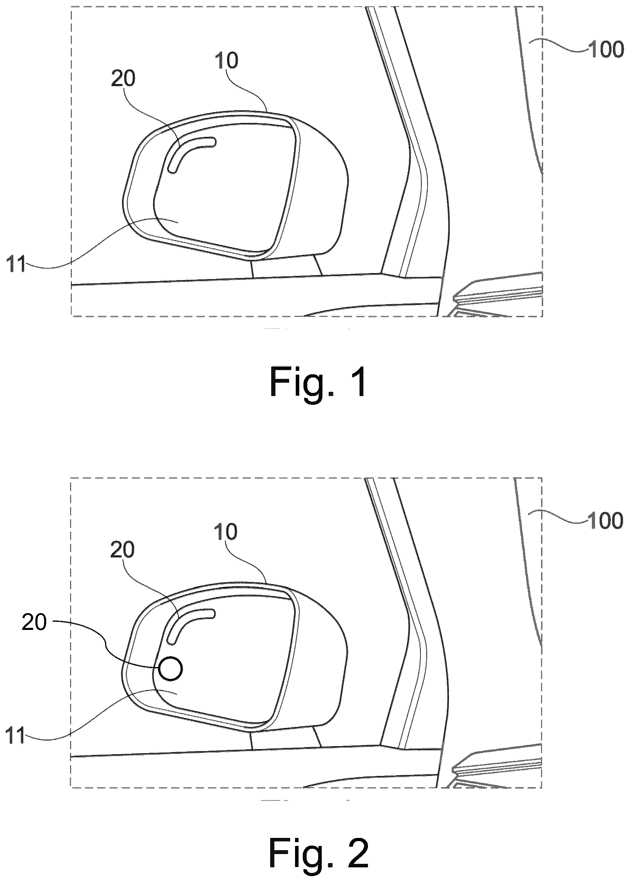

Figure 1 shows a view from inside of a cabin of a vehicle 100 onto a rear-view device 10 of the vehicle 100. In this example, the rear-view device 10 is exemplary shown as an exterior rear-view device 10. The exterior rear-view device 10 of this example is configured as an exterior rear-view mirror with a mirror area 11 of a mirror unit of the rear-view device 10. Alternatively, or additionally, a display area of a display unit may be provided on the rear-view device 10.

The rear-view device 10 comprises at least one indication unit 20. In this example, only one indication unit 20 is shown but the rear-view device 10 may alternatively comprise two or more indication units 20 as exemplary shown in Fig. 2. In this example, the indication unit 20 is exemplary configured as a light unit with one or more light-emitting means, e.g., light-emitting diodes, which is arranged in the mirror area 11 of the mirror unit of the rear-view device 10.

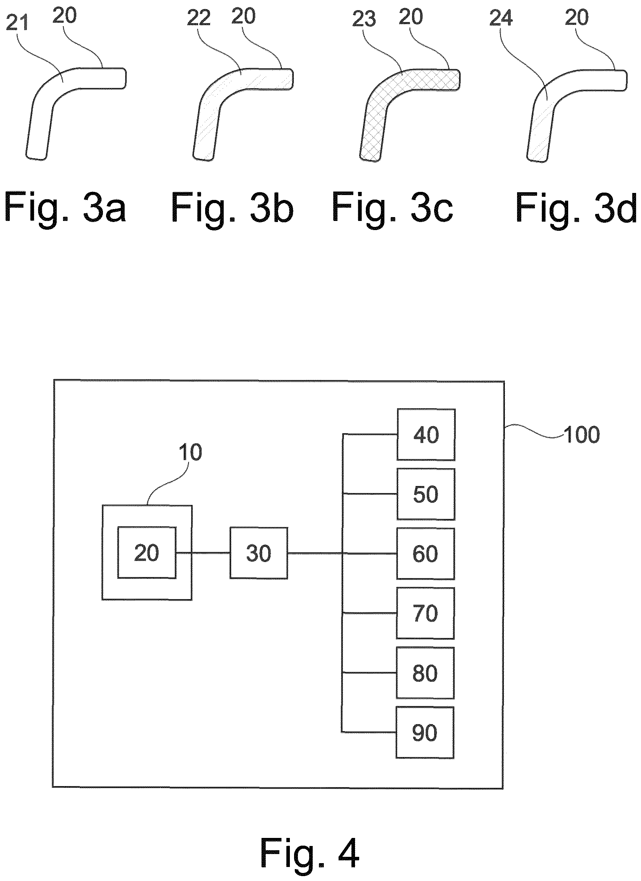

Alternatively, as exemplary shown in Figure 2, the exterior rear-view device 10 may comprise two indication units 20. Each one of these indication units 20 may be used to indicate a different state of a system 40, 50, 60, 70, 80, 90 (see Fig. 4) as herein explained further below. Alternatively, for example, any one of the indication units 20 in Fig. 2 or the single indication unit 20 in Fig. 1 may be used to provide indications of different states of one or more of the systems 40, 50, 60, 70, 80, 90.

As shown in the various examples of Figures 3a, 3b, 3c, 3d, the indication unit 20 generally may be configured for various operating conditions 21, 22, 23, 24 depending on the indication of a certain state of a system 40, 50, 60, 70, 80, 90 which shall be given to a user or driver of the vehicle 100.

Specifically, as shown in Figure 4, the vehicle 100 may have a variety of systems 40 to 90 connected to or as part of a control unit 30, which may be connected to the indication unit 20. Specifically, the control unit 30 and/or one or more of the systems 40 to 90 may at least partially or fully be provided as or by a microcontroller or computer of the vehicle 100, e.g., a central computer. Alternatively, some or multiple of the systems 40 to 90 may be provided or executed by separate computers or microcontrollers of the vehicle 100.

Specifically, the control unit 30 may be configured to control the indication unit 20 according to one or more states from one or more of the vehicle systems 40 to 90.

For example, the indication unit 20 may be configured to indicate a state of one or more of the systems 50, 60, 70, 80, 90 of the vehicle 100 depending on a standstill state of the vehicle 100. Specifically, the indication unit 20 may be configured such that it indicates the state of the one or more systems 50, 60, 70, 80, 90 only based on the standstill state of the vehicle 100, e.g., when the vehicle 100 is parked. In other words, the states of the one or more systems 50, 60, 70, 80, 90 may only be indicated by the indication unit 20 in case the vehicle 100 is not driving. Otherwise, an indication of any one of these states may not be required, specifically during a driving state of the vehicle 100. In the standstill state of the vehicle 100, for example, the indication unit 20 may indicate an activated state including an activated alarm of an anti-theft system 50 of the vehicle 100. Alternative indications or additional indications on the same or a different indication unit 20 on the exterior rear-view device 10 may include indication of a passenger occupancy state from a passenger detection system 60 of the vehicle 100, of a state of charge of a battery system 70 of the vehicle 100, of a driving range state of a range determination system 80 of the vehicle 100, and/or a proximity state between an object and a vehicle door of the vehicle 100 from a proximity system 90 of the vehicle 100.

Additionally, it may be provided that the same or a different indication unit 20 indicates a situation in an environment of the vehicle 100 provided by a driver information system 40 of the vehicle 100. Specifically, the driver information system 40 may be a blind spot information system. Accordingly, the indication unit 20 may indicate that another road participant, e.g., another vehicle, is in a blind spot of the rear-view device 10. For example, in this case, the indication unit 20 as shown in Fig. 1 may be set from a first operating condition 21 as shown exemplary in Fig. 3a to a second operating condition 22 as shown exemplary in Fig. 3b. Specifically, in the first operating condition 21, the indication unit 20 may not emit any light or, in other words, be off. In the second operating condition 22, however, the indication unit 20 may be illuminated or, in other words, emit light to indicate the blind spot situation.

The control unit 30 may be configured to provide and/or receive a signal indicative of either a stillstand state of the vehicle 100 or a driving state of the vehicle 100 to the indication unit 20. Accordingly, the control unit 30 may, depending on such signal provided to the indication unit 20 and/or received at the control unit 30, control which one of the states of the respective systems 40, 50, 60, 70, 80, 80 is to be used for indication by the rear-view device 10.

The indication unit 20 exemplary configured as a light unit in Fig. 1 may be configured to emit the same light for several of the states as described herein, e.g., using the first operating condition 21 of Fig. 3a and the second operating condition 22 of Fig. 3b. However, alternatively, different lights may be emitted by the indication unit 20. For example, instead of using either the first operating condition 21 or the second operating condition 22 for indicating a passenger occupancy state, the indication unit 20 may be using the third operating condition 23 shown in Fig. 3c, which may be having a different color of light, e.g., a red color. Therefore, even independent from the different states, the user of the vehicle 100 may even better distinguish the indications of the states of the different systems 40, 50, 60, 70, 80, 90 from one another.

Moreover, the indication unit 20 may be configured for or with any other operating conditions, such as the fourth operating condition 24 exemplary shown in Fig. 3d. Here, the indication unit 20 is only partially activated or illuminated or only a part of its surface emits light compared to Figs. 3b and 3c. For example, this may be achieved when the indication unit 20 comprises several light-emitting diodes and only few but not all of these are being illuminated. For example, such partial illumination may be used to indicate the state of charge, driving range state and/or proximity state between the object and vehicle door as discussed herein. Here, the illuminated area or surface of the indication unit 20 may correlate to the state of charge, driving range state and/or proximity state between the object and vehicle door. Alternatively, or additionally, an illumination intensity, a flashing frequency, and/or similar may be correlating to the state of charge, driving range state and/or proximity state between the object and vehicle door. Thereby, it is possible to not only indicate a state or condition of one of the systems 40 to 90 in a qualitative manner but also in a quantitative manner.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of' may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third element, a first or second element do not need to be present unless they are explicitly referred to as being required. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

Any reference signs in the claims should not be construed as limiting the scope of the claims.

### LIST OF REFERENCE SIGNS

- 10: rear-view device
- 11: mirror area
- 20: indication unit
- 21: first operating condition
- 22: second operating condition
- 23: third operating condition
- 24: fourth operating condition
- 30: control unit
- 40: driver information system
- 50: anti-theft system
- 60: passenger detection system
- 70: battery management system
- 80: range determination system
- 90: proximity system
- 100: vehicle

## Claims

1. A rear-view device (10) for a vehicle (100), the rear-view device (10) comprising at least one indication unit (20) configured to provide an indication of a state of one or more systems (50, 60, 70, 80, 90) of the vehicle (100) depending on a standstill state of the vehicle (100).

2. The rear-view device (10) of claim 1, wherein the state of the one or more systems (50, 60, 70, 80, 90) is from one or more of:
an activated state of an anti-theft system (50) of the vehicle (100);
a passenger occupancy state from a passenger detection system (60) of the vehicle (100);
a state of charge of a battery system (70) of the vehicle (100);
a driving range state of a range determination system (80) of the vehicle (100); or
a proximity state between an object and a vehicle door of a proximity system (90) of the vehicle (100).

3. The rear-view device (10) of claim 1 or 2, wherein the at least one indication unit (20) is a single indication unit (20) configured to provide an indication for two or more of:
an activated state of an anti-theft system (50) of the vehicle (100);
a passenger occupancy state from a passenger detection system (60) of the vehicle (100);
a state of charge of a battery system (70) of the vehicle (100);
a driving range state of a range determination system (80) of the vehicle (100); or
a proximity state between an object and a vehicle door of a proximity system (90) of the vehicle (100).

4. The rear-view device (10) of any one of the previous claims, wherein the at least one indication unit (20) is further configured to provide a further indication of a further state of a further system (40) of the vehicle (100) depending on a driving state of the vehicle (100).

5. The rear-view device (10) of any one of the previous claims, wherein the state is an activated state of an anti-theft system (50) of the vehicle (100) and the at least one indication unit (20) is configured to provide the indication of the activated state of the anti-theft system (50) when one or more doors of the vehicle (100) are locked.

6. The rear-view device (10) of any one of the previous claims, wherein the state is a state of charge of a battery system (70) of the vehicle (100) and/or a driving range state of a range determination system (80) of the vehicle (100) during a charging and/or re-fueling process of the vehicle (100).

7. The rear-view device (10) of any one of the previous claims, wherein the state is a proximity state between an object and a vehicle door of a proximity system (90) of the vehicle (100) during a parked state of the vehicle (100).

8. The rear-view device (10) of any one of the previous claims, wherein the at least one indication unit (20) is at least one light unit configured to emit a light to provide the indication.

9. The rear-view device (10) of claim 8, wherein the at least one light unit comprises one or more light-emitting means, the one or more light-emitting units being arranged in a mirror area (11) of a mirror unit or in a display area of a display unit of the rear-view device (10) such that the light is emitted at the mirror area (11) or the display area.

10. The rear-view device (10) of claim 8 or 9, wherein the at least one light unit is configured to provide the indication of an activated state of an anti-theft system (50) of the vehicle (100) by emitting a red light and/or a flashing light.

11. The rear-view device (10) of any one of claims 8 to 10, wherein the at least one light unit is configured to provide the indication of a state of charge of a battery system (60) of the vehicle (100) and/or the driving range state of a range determination system (70) of the vehicle (100) by emitting a light with an intensity, flashing frequency, illumination area and/or color correlating with the state of charge and/or the driving range state of the vehicle (100).

12. The rear-view device (10) of any one of claims 8 to 11, wherein the at least one light unit is configured to provide the indication of a proximity state between an object and a vehicle door of a proximity system (90) of the vehicle (10) by emitting a light with an intensity, flashing frequency, illumination area and/or color correlating to the proximity state.

13. The rear-view device (10) of any one of claims 1 to 7, wherein the at least one indication unit (20) is a display unit configured to display the indication.

14. The rear-view device (10) of any one of the previous claims, wherein the rear-view device (10) is an exterior rear-view device.

15. A vehicle (100) comprising the rear-view device (10) of any one of the previous claims.
